# EUROPÄISCHE PATENTANMELDUNG

(11) **EP 4 470 431 A1**
(43) Veröffentlichungstag der Anmeldung: **04.12.2024**
(21) Anmeldenummer: 24156823.7
(22) Anmeldetag: 09.02.2024
(51) Int. Cl.: A47J 43/07

(54) **BEHÄLTERSYSTEM**

(30) Priorität: 30.05.2023 DE 102023205031
(71) Anmelder: WMF GmbH, 73312 Geislingen/Steige (DE)
(72) Erfinder: ROTH, Klaus, 88527 Unlingen (DE)
(74) Vertreter: Pfenning, Meinig & Partner mbB

(57) **Zusammenfassung**

Die vorliegende Erfindung betrifft ein Behältersystem umfassend einen Behälter und einen Deckel zum Verschließen des Behälters. Das Behältersystem umfasst mindestens eine elektrisch betreibbare Vorrichtung, eine erste Verriegelungsmechanik zum Verriegeln des Deckels mit dem Behälter an mindestens einer ersten Verriegelungsstelle und eine zweite Verriegelungsmechanik zum Verriegeln des Deckels mit dem Behälter an mindestens einer sich von der mindestens einen ersten Verriegelungsstelle unterscheidenden zweiten Verriegelungsstelle. Ferner umfasst der Deckel einen Schiebemechanismus mit einem Schiebeelement, welches ein Auslöseelement zum Auslösen einer Freigabe der mindestens einen elektrisch betreibbaren Vorrichtung und einen Aufnahmebereich zur Aufnahme eines oberen Teils des Behälters aufweist. Das erfindungsgemäße Behältersystem weist eine erhöhte Sicherheit auf. So kann insbesondere das Risiko des Entweichens von im Behälter befindlichen Gut während dem Betrieb der mindestens einen elektrisch betreibbaren Vorrichtung im Wesentlichen vermieden oder zumindest deutlich verringert werden.

## Beschreibung

Die vorliegende Erfindung betrifft ein Behältersystem umfassend einen Behälter und einen Deckel zum Verschließen des Behälters. Das Behältersystem umfasst mindestens eine elektrisch betreibbare Vorrichtung, eine erste Verriegelungsmechanik zum Verriegeln des Deckels mit dem Behälter an mindestens einer ersten Verriegelungsstelle und eine zweite Verriegelungsmechanik zum Verriegeln des Deckels mit dem Behälter an mindestens einer sich von der mindestens einen ersten Verriegelungsstelle unterscheidenden zweiten Verriegelungsstelle. Ferner umfasst der Deckel einen Schiebemechanismus mit einem Schiebeelement, welches ein Auslöseelement zum Auslösen einer Freigabe der mindestens einen elektrisch betreibbaren Vorrichtung und einen Aufnahmebereich zur Aufnahme eines oberen Teils des Behälters aufweist. Das erfindungsgemäße Behältersystem weist eine erhöhte Sicherheit auf. So kann insbesondere das Risiko des Entweichens von im Behälter befindlichen Gut während dem Betrieb der mindestens einen elektrisch betreibbaren Vorrichtung im Wesentlichen vermieden oder zumindest deutlich verringert werden.

Behältersysteme, bei denen der Deckel nur über die Deckeldichtung im Behälter aufgesetzt ist, und die damit komplett ohne Sicherung sind, sind im europäischen Raum im Wesentlichen nicht mehr zu finden.

Behältersysteme mit einseitiger Sicherung des Deckels auf dem Behälter sind in vielfältigen Ausführungen zu finden:
- Bajonette Systemen
- Einfachen Hackenverschlüsse
- Hackenverschlüsse über einen Schieber der gleichzeitig beim Öffnen den Deckel anhebt
- Hackenverschlüsse mit Schieber die bei Betätigung zuerst den Sicherheitsmechanismus aktivieren.
- Verschlüsse die zusätzlich mit den Verbindungssystemen Behälter und Motoreinheit gekoppelt sind.

Behältersysteme mit einem umlaufenden Verschluss sind ebenfalls zu finden. Bei bekannten Systemen wird ein sicherer Deckelverschluss meist durch ein sog. Bajonette-Verschluss umgesetzt. Durch die Drehbewegung werden verschiedene Segmente überlappt, sodass eine gute, sichere mechanische Verbindung entsteht. Vorzugsweise ist der Behälter hier in Kunststoff ausgeführt, da hier eine entsprechende Umsetzung ohne großen Aufwand möglich ist.

Auch Behälter aus Glas könnten mit entsprechenden Segmenten ausgebildet werden, dies ist in der Umsetzung erheblich aufwändiger und deshalb sehr teuer. Zudem schränken Systeme in Kunststoffausführung die Design-Ansprüche deutlich ein. Der Aufwand bezüglich Reinigung ist erhöht, die Lebensdauerbeständigkeit des Materials durch Aushärtung des Kunststoffs, ist deutlich schlechter, insbesondere bei der Verwendung in der Spülmaschine. Ebenfalls ist bei Premium Produkten bezüglich der Lebensmittelunbedenklichkeit ein Behälter aus Kunststoff nicht der Anspruch. Glas hingegen erfüllt diese Ansprüche.

Die Verschlüsse bzw. Sicherheitseinrichtungen bisheriger existierender Behältersysteme können ein einseitiges Öffnen bzw. Anheben des Deckels nicht verhindern. Je nach Toleranzen der Bauteile und der Anordnung (Hebelverhältnisse) des einseitigen Verschlusses kann der Deckel trotzdem einseitig angehoben werden. Solange die einseitige Sicherheitseinrichtung anschlägt und der Deckel nicht weiter geöffnet ist, als dass ein Finger oder eine Hand in die Öffnung kommen kann, gilt das System nach den aktuell gültigen gesetzlichen Sicherheitsanforderungen als sicher. Dies kann jedoch nicht verhindern, dass im Extremfall Lebensmittel aus dem Behälter geschleudert bzw. schlagartig entweichen können, bevor die Sicherheitseinrichtung anschlägt. Im Extremfall kann der Deckel "fingerbreit" geöffnet sein, ohne dass die einseitige Sicherheitseinrichtung anschlägt.

Zudem kann in bisher existierenden Behältersystemen das Gerät in Betrieb genommen werden, ohne dass der dem einseitigen Sicherheitssystem gegenüberliegende Bereich des Deckels korrekt verschlossen ist. Dies gilt insbesondere bei Systemen mit Behälter-Schnaupe überlappenden Deckelsystemen: Das Gerät kann in Betrieb genommen werden ohne dass das Deckelsystem die Schnaupe überlappt. Dies ist umso gefährlicher, da sich der Kunde in falscher Sicherheit wähnt. Hiermit kann die einseitige Sicherheitseinrichtung den Extremfall nicht verhindern, sodass ein erhöhtes Risiko für Sach- und Personenschäden vorhanden ist. Dies ist auch den Warnhinweisen in der Betriebsanleitung der Geräte zu entnehmen, insbesondere bei Verarbeitung von erhitzten Lebensmitteln.

Ausgehend hiervon war es die Aufgabe der vorliegenden Erfindung ein Behältersystem umfassend einen Behälter, einen Deckel zum Verschließen des Behälters und mindestens eine elektrisch betreibbare Vorrichtung bereitzustellen, bei dem ein korrektes Aufsetzen des Deckels auf eine einfache Weise möglich ist und das eine erhöhte Sicherheit aufweist.

Diese Aufgabe wird bezüglich eines Behältersystems mit den Merkmalen des Anspruchs 1 gelöst. Die abhängigen Patentansprüche stellen dabei vorteilhafte Weiterbildungen dar.

Erfindungsgemäß wird somit ein Behältersystem umfassend einen Behälter und einen Deckel zum Verschließen des Behälters bereitgestellt, wobei das Behältersystem mindestens eine elektrisch betreibbare Vorrichtung, eine erste Verriegelungsmechanik zum Verriegeln des Deckels mit dem Behälter an mindestens einer ersten Verriegelungsstelle und eine zweite Verriegelungsmechanik zum Verriegeln des Deckels mit dem Behälter an mindestens einer sich von der mindestens einen ersten Verriegelungsstelle unterscheidenden zweiten Verriegelungsstelle umfasst

Die erste Verriegelungsmechanik umfasst mindestens ein sich am Deckel befindendes erstes Verriegelungselement, das zum Verriegeln des Deckels mit dem Behälter an der mindestens einen ersten Verriegelungsstelle mit mindestens einem sich am Behälter befindenden ersten Gegenelement in Eingriff bringbar ist. Die zweite Verriegelungsmechanik umfasst mindestens ein sich am Deckel befindendes zweites Verriegelungselement, das zum Verriegeln des Deckels mit dem Behälter an der mindestens einen zweiten Verriegelungsstelle mit mindestens einem sich am Behälter befindenden zweiten Gegenelement in Eingriff bringbar ist.

Zudem umfasst der Deckel einen Schiebemechanismus mit einem Schiebeelement, welches ein Auslöseelement zum Auslösen einer Freigabe der mindestens einen elektrisch betreibbaren Vorrichtung und einen Aufnahmebereich zur Aufnahme eines oberen Teils des Behälters aufweist.

Erfindungsgemäß ist - durch das in Eingriff Bringen des mindestens einen zweiten Verriegelungselements mit dem mindestens einen zweiten Gegenelement - das Schiebeelement in eine Richtung parallel zu einer Grundfläche (bzw. Haupterstreckungsebene) des Deckels aus einer Grundposition in eine verschobene Position verschiebbar,
wobei, wenn sich das Schiebelement (durch Eingriff des mindestens einen zweiten Verriegelungselements mit dem mindestens einen zweiten Gegenelement) in der verschobenen Position befindet, das Auslöseelement so relativ zum mindestens einen ersten Verriegelungselement positioniert ist, dass bei (bzw. durch) Aufnahme des oberen Teils des Behälters in den Aufnahmebereich sowohl das mindestens eine erste Verriegelungselement mit dem mindestens einen ersten Gegenelement in Eingriff bringbar ist (bzw. gebracht wird) als auch das Auslöseelement in eine Auslöseposition an einer Auslösestelle des Behälters bringbar ist (bzw. gebracht wird), in welcher es eine Freigabe der mindestens einen elektrisch betreibbaren Vorrichtung auslöst, und
wobei, wenn sich das Schiebelement in der Grundposition befindet, das Auslöseelement so relativ zum mindestens einen ersten Verriegelungselement positioniert ist, dass das Auslöseelement nicht in die Auslöseposition an der Auslösestelle des Behälters bringbar ist.

Unter der mindestens einen ersten Verriegelungsstelle wird die mindestens eine Stelle des Behältersystems verstanden, an welcher das mindestens eine erste Verriegelungselement mit dem mindestens einen ersten Gegenelement in Eingriff ist (bzw. steht), wenn der Deckel über die mindestens eine erste Verriegelungsmechanik mit dem Behälter verriegelt ist.

Unter der mindestens einen zweiten Verriegelungsstelle wird die mindestens eine Stelle des Behältersystems verstanden, an welcher das mindestens eine zweite Verriegelungselement mit dem mindestens einen zweiten Gegenelement in Eingriff ist (bzw. steht), wenn der Deckel über die mindestens eine zweite Verriegelungsmechanik mit dem Behälter verriegelt ist.

Um ein unbeabsichtigtes Öffnen des mit dem Deckel verschlossenen Behälters zu vermeiden, weist das erfindungsgemäße Behältersystem zwei Verriegelungsmechaniken auf, durch welche der Deckel mit dem Behälter an unterschiedlichen Verriegelungsstellen verriegelt wird. Schon hierdurch weist das Behältersystem eine erhöhte Sicherheit gegenüber bekannten Behältersystem mit lediglich einer Verriegelungsmechanik auf.

Ein korrektes Aufsetzen des Deckels auf den Behälter ist auf einfache Weise möglich und kann dadurch erfolgen, dass zunächst das mindestens eine zweite Verriegelungselement mit dem mindestens einen zweiten Gegenelement in Eingriff gebracht wird, wodurch das Schiebeelement in eine Richtung parallel zu einer Grundfläche des Deckels aus einer Grundposition in eine verschobene Position verschoben wird. Anschließend kann der obere Teil des Behälters in den Aufnahmebereich aufgenommen werden, wodurch sowohl das mindestens eine erste Verriegelungselement mit dem mindestens einen ersten Gegenelement in Eingriff gebracht wird als auch das Auslöseelement in eine Auslöseposition an einer Auslösestelle des Behälters gebracht wird, in welcher es eine Freigabe der mindestens einen elektrisch betreibbaren Vorrichtung auslöst.

Das erfindungsgemäße Behältersystem ist somit sehr bedienerfreundlich. So wird durch die aufeinander abgestimmte Funktion der Schiebemechanik mit dem ersten und zweiten Verriegelungsmechanismus erreicht, dass auf einfache Weise ein korrektes Aufsetzen des Deckels auf den Behälter erreicht werden kann, bei welchem der Deckel (zwangsläufig) über beide Verriegelungsmechanismen mit dem Behälter verriegelt wird. Ein nicht-korrektes Aufsetzen des Deckels ist hingegen deutlich erschwert und ist zudem ohne weiteres daran erkennbar, dass sich die elektrisch betreibbare Vorrichtung nicht in Betrieb nehmen lässt.

Dadurch, dass eine korrektes Aufsetzen Deckels auf den Behälter, bei welchem der Deckel über beide Verriegelungsmechaniken mit dem Behälter verriegelt wird, auf einfache Weise möglich ist, ist auch die Sicherheit des erfindungsgemäßen Behältersystems deutlich erhöht, da so die Gefahr eines nichtkorrekten Aufsetzens des Deckels mit unvollständiger Verriegelung verringert wird.

Ferner wird die Sicherheit des erfindungsgemäßen Behältersystems auch dadurch erhöht, dass das Auslöseelement so relativ zum mindestens einen ersten Verriegelungselement positioniert ist, dass das Auslöseelement nicht in die Auslöseposition an der Auslösestelle des Behälters bringbar ist, wenn sich das Schiebelement in der Grundposition befindet. Hierdurch wird das Risiko einer Inbetriebnahme der elektrisch betreibbaren Vorrichtung, wenn der Deckel nicht korrekt bzw. nicht vollständig gesichert auf den Behälter aufgesetzt ist, stark verringert. Aufgrund dessen kann das Risiko des Entweichens von im Behälter befindlichen Gut während dem Betrieb der mindestens einen elektrisch betreibbaren Vorrichtung leichter vermieden bzw. deutlich verringert werden.

In der Folge weist das erfindungsgemäße Behältersystem eine deutlich erhöhte Sicherheit auf, sowohl bezüglich möglicher Personenschäden als auch bezüglich möglicher Sachschäden durch Entweichen von Gut aus dem Behälter beim Betrieb der mindestens einen elektrisch betreibbaren Vorrichtung. Dabei kann auch das Risiko eines schlagartigen Öffnens des Deckels beim Betrieb der mindestens einen elektrisch betreibbaren Vorrichtung leichter vermieden bzw. deutlich verringert werden.

Ein weiterer Vorteil des erfindungsgemäßen Behältersystems ist, dass die erste Verriegelungsmechanik, die zweite Verriegelungsmechanik und auch der Schiebemechanismus rein mechanisch ausgeführt sein können. Dies hat bezüglich Verschmutzung und Wasser kein zusätzliches Risiko eines z.B. elektrischen Kurzschlusses, oder ähnlichem. Ebenfalls sind keine zusätzlich stromführenden Einrichtungen nötig.

Ein wesentliches Element des erfindungsgemäßen Behältersystems ist der spezielle Schiebemechanismus. Dieser weist ein Schiebelement auf, welches einerseits ein Auslöseelement zum Auslösen einer Freigabe der mindestens einen elektrisch betreibbaren Vorrichtung und andererseits einen Aufnahmebereich zur Aufnahme eines, vorzugsweise den gesamten Umfang des Behälters am oberen Ende des Behälters umfassenden, oberen Teils des Behälters aufweist. Das Schiebeelement ist - durch das Verriegeln der zweiten Verriegelungsmechanik - in einer Richtung parallel zu einer Grundfläche des Deckels von einer Grundposition in eine verschobene Position verschiebbar. Das Schiebeelement kann somit eine Grundposition oder eine verschobene Position einnehmen, wobei das Schiebeelement durch das Verriegeln der zweiten Verriegelungsmechanik von der Grundposition in die verschobene Position verschoben werden kann. Das Verschieben von Grundposition in die verschobene Position erfolgt in einer Richtung parallel zu einer Grundfläche des Deckels. Unter der Grundfläche wird dabei die Haupterstreckungsebene des Deckels verstanden. Das Verschieben des Schiebeelements in eine Richtung parallel zu einer Grundfläche (bzw. Haupterstreckungsebene) des Deckels aus einer Grundposition in eine verschobene Position wird dadurch erreicht, dass das mindestens eine zweite Verriegelungselement mit dem mindestens einen zweiten Gegenelement in Eingriff gebracht wird. Mit anderen Worten wird das Schiebeelement durch das in Eingriff Bringen des mindestens einen zweiten Verriegelungselements mit dem mindestens einen zweiten Gegenelement in eine Richtung parallel zu einer Grundfläche (bzw. Haupterstreckungsebene) des Deckels aus der Grundposition in die verschobene Position verschoben.

Die Position des Schiebeelements ist für das Auslösen der Freigabe der mindestens einen elektrisch betreibbaren Vorrichtung durch das Auslöseelement von entscheidender Bedeutung. Wenn sich das Schiebelement (durch Eingriff des mindestens einen zweiten Verriegelungselements mit dem mindestens einen zweiten Gegenelement) in der verschobenen Position befindet, ist das Auslöseelement so relativ zum mindestens einen ersten Verriegelungselement positioniert, dass bei (bzw. durch) Aufnahme des oberen Teils des Behälters in den Aufnahmebereich sowohl das mindestens eine erste Verriegelungselement mit dem mindestens einen ersten Gegenelement in Eingriff gebracht wird als auch das Auslöseelement in eine Auslöseposition an einer Auslösestelle des Behälters gebracht wird, in welcher es eine Freigabe der mindestens einen elektrisch betreibbaren Vorrichtung auslöst. Wenn sich das Schiebelement in der Grundposition befindet, ist das Auslöseelement hingegen so relativ zum mindestens einen ersten Verriegelungselement positioniert, dass das Auslöseelement (bei versuchter Aufnahme des oberen Teils des Behälters in den Aufnahmebereich) nicht in die Auslöseposition an der Auslösestelle des Behälters gebracht werden kann. Somit ist gewährleistet, dass die Freigabe der mindestens einen elektrisch betreibbaren Vorrichtung nicht erfolgen kann, wenn sich das Schiebelement in der Grundposition befindet. Stattdessen muss das Schiebelement (durch in Eingriff Bringen des mindestens einen zweiten Verriegelungselements mit dem mindestens einen zweiten Gegenelement in die verschobene Position) verschoben sein, damit die Freigabe der mindestens einen elektrisch betreibbaren Vorrichtung ausgelöst werden kann. Da zudem das Verschieben des Schiebeelements aus der Grundposition in die verschobene Position dadurch erreicht wird, dass das mindestens eine zweite Verriegelungselement mit dem mindestens einen zweiten Gegenelement in Eingriff gebracht wird, kann das Risiko im Wesentlichen vermieden oder zumindest deutlich verringert werden, dass die Freigabe der mindestens einen elektrisch betreibbaren Vorrichtung ausgelöst wird, wenn das mindestens eine zweite Verriegelungselement nicht mit dem mindestens einen zweiten Gegenelement in Eingriff gebracht ist.

Da ferner bei Aufnahme des oberen Teils des Behälters in den Aufnahmebereich, während sich das Schiebelement in der verschobenen Position befindet, sowohl das mindestens eine erste Verriegelungselement mit dem mindestens einen ersten Gegenelement in Eingriff gebracht wird als auch das Auslöseelement in eine Auslöseposition an einer Auslösestelle des Behälters gebracht wird, und zudem, wenn sich das Schiebelement in der Grundposition befindet, das Auslöseelement so relativ zum mindestens einen ersten Verriegelungselement positioniert ist, dass das Auslöseelement (bei versuchter Aufnahme des oberen Teils des Behälters in den Aufnahmebereich) nicht in die Auslöseposition an der Auslösestelle des Behälters gebracht werden kann, ist gewährleistet, dass die Freigabe der mindestens einen elektrisch betreibbaren Vorrichtung nur dann ausgelöst ist, wenn das mindestens eine erste Verriegelungselement mit dem mindestens einen ersten Gegenelement in Eingriff gebracht ist.

Insgesamt kann das Risiko im Wesentlichen vermieden oder zumindest deutlich gesenkt werden, dass die Freigabe der mindestens einen elektrisch betreibbaren Vorrichtung ausgelöst ist bzw. die mindestens eine elektrisch betreibbare Vorrichtung aktiviert werden kann, wenn nicht sowohl das mindestens eine erste Verriegelungselement mit dem mindestens einen ersten Gegenelement in Eingriff gebracht ist als auch das mindestens eine zweite Verriegelungselement mit dem mindestens einen zweiten Gegenelement in Eingriff gebracht ist. Die Gefahr eines Betreibens der Vorrichtung bei nicht korrekt auf dem Behälter aufgesetztem Deckel bzw. bei nicht vollständiger Verriegelung beider Verriegelungsmechanismen kann somit weiter minimiert werden. So kann insbesondere auch das Risiko des Entweichens von im Behälter befindlichem Gut während dem Betrieb der mindestens einen elektrisch betreibbaren weiter verringert bzw. im Wesentlichen vermieden werden.

Beispielsweise handelt es sich
- bei dem erfindungsgemäßen Behältersystem um eine Mischvorrichtung bzw. einen Mixer (Blender), und/oder
- bei der mindestens einen elektrisch betreibbaren Vorrichtung um mindestens einen Motor.

Eine bevorzugte Ausführungsform des erfindungsgemäßen Behältersystems ist dadurch gekennzeichnet, dass, wenn sich das Schiebelement in der Grundposition befindet, das Auslöseelement so relativ zum mindestens einen ersten Verriegelungselement positioniert ist, dass weder das Auslöseelement in die Auslöseposition an der Auslösestelle des Behälters bringbar ist noch das mindestens eine erste Verriegelungselement mit dem mindestens einen ersten Gegenelement in Eingriff bringbar ist. Auf diese Weise kann ein nicht korrektes Aufsetzen des Deckels auf den Behälter noch leichter und schneller erkannt werden.

Eine weitere bevorzugte Ausführungsform des erfindungsgemäßen Behältersystems zeichnet sich dadurch aus, dass
- das Auslöseelement und das mindestens eine erste Verriegelungselement, wenn sich das Schiebelement in der verschobenen Position befindet, einen größeren Abstand zueinander aufweisen als, wenn sich das Schiebelement in der Grundposition befindet, und/oder
- das mindestens einen erste Verriegelungselement in einer zur Grundfläche des Deckels senkrecht verlaufenden Richtung weiter von einem Grundkörper des Deckels absteht als das Auslöseelement, und/oder
- der Behälter eine erste Vertiefung aufweist, in welche das mindestens eine erste Verriegelungselement beim in Eingriff Bringen des mindestens einen ersten Verriegelungselements mit dem mindestens einen ersten Gegenelement einführbar ist (bzw. eingeführt werden muss) und der Behälter eine zweite Vertiefung aufweist, in welche das Auslöseelement beim Bringen des Auslöseelements in die Auslöseposition an der Auslösestelle des Behälters einführbar ist (bzw. eingeführt werden muss), wobei sich die erste Vertiefung und/oder die zweite Vertiefung vorzugweise an einem Griff des Behälters befindet/befinden, wobei vorzugsweise, wenn sich das Schiebelement in der verschobenen Position befindet, das Auslöseelement und das mindestens eine erste Verriegelungselement einen Abstand zueinander aufweisen, der einem bzw. dem Abstand zwischen der ersten Vertiefung und der zweiten Vertiefung entspricht, und, wenn sich das Schiebelement in der Grundposition befindet, das Auslöseelement und das mindestens eine erste Verriegelungselement einen Abstand zueinander aufweisen, der kleiner ist als der Abstand zwischen der ersten Vertiefung und der zweiten Vertiefung.

Dies sind bevorzugte Möglichkeiten, um zu erreichen, dass, wenn sich das Schiebelement in der verschobenen Position befindet, das Auslöseelement so relativ zum mindestens einen ersten Verriegelungselement positioniert ist, dass bei Aufnahme des oberen Teils des Behälters in den Aufnahmebereich sowohl das mindestens eine erste Verriegelungselement mit dem mindestens einen ersten Gegenelement in Eingriff bringbar ist als auch das Auslöseelement in eine Auslöseposition an einer Auslösestelle des Behälters bringbar ist, in welcher es eine Freigabe der mindestens einen elektrisch betreibbaren Vorrichtung auslöst, wobei, wenn sich das Schiebelement in der Grundposition befindet, das Auslöseelement so relativ zum mindestens einen ersten Verriegelungselement positioniert ist, dass das Auslöseelement nicht in die Auslöseposition an der Auslösestelle des Behälters bringbar ist. So kann das Auslöseelement nur dann in die zweite Vertiefung eingeführt und dort in die Auslöseposition an der Auslösestelle des Behälters gebracht werden, wenn sich das Schiebelement in der verschobenen Position befindet, da dann das erste Verriegelungselement gleichzeitig in die erste Vertiefung eingeführt werden kann. Befindet sich das Schiebelement hingegen in der Grundposition, ist der Abstand zwischen Auslöseelement und erstem Verriegelungselement zu gering, um sie in die jeweiligen Vertiefungen einzuführen. Das Auslöseelement kann so nicht in die zweite Vertiefung eingeführt werden, da das erste Verriegelungselement nicht in die erste Vertiefung eingeführt werden kann und so das Einführen des Auslöseelements in die zweite Vertiefung blockiert.

Eine weitere bevorzugte Ausführungsform des erfindungsgemäßen Behältersystems ist dadurch gekennzeichnet, dass das mindestens eine zweite Verriegelungselement in Form mindestens einer Hinterschneidung am Rand des Deckels ausgeführt ist und das mindestens eine zweite Gegenelement mindestens ein vorstehender Abschnitt des oberen Teils des Behälters, vorzugsweise eine am Behälter angeordnete Schnaupe oder ein Teil einer am Behälter angeordneten Schnaupe, ist.

Gemäß einer weiteren bevorzugten Ausführungsform des erfindungsgemäßen Behältersystems umfasst das mindestens eine zweite Verriegelungselement mehrere zweite Verrieglungselemente und/oder umfasst das mindestens eine zweite Gegenelement mehrere zweite Gegenelemente.

Eine weitere bevorzugte Ausführungsform des erfindungsgemäßen Behältersystems ist dadurch gekennzeichnet, dass der Schiebemechanismus ein Federelement aufweist, welches in einem entspannten Zustand ist, wenn sich das Schiebelement in der Grundposition befindet, und welches in einem gespannten Zustand ist, wenn sich das Schiebelement in der verschobenen Position befindet. Das Federelement ist so ausgeführt, dass es beim das Verschieben des Schiebeelements von der Grundposition in die verschobene Position (durch das in Eingriff Bringen des zweiten Verriegelungselements mit dem zweiten Gegenelement) vom entspannten Zustand in den gespannten Zustand überführt wird und dass es beim Übergang vom gespannten Zustand in den entspannten Zustand das Schiebeelement (von der verschobenen Position) in die Grundposition verschiebt. Durch das Federelement bewegt sich das Schiebelement somit automatisch (aus der verschobenen Position) in die Grundposition zurück, wenn das zweite Verriegelungselement aus dem Eingriff mit dem zweiten Gegenelement entfernt wird. So kann verhindert werden, dass sich das Schiebeelement noch in der verschobenen Position befindet, obwohl das zweite Verriegelungselement gar nicht mehr in Eingriff mit dem zweiten Gegenelement steht. Die Gefahr, dass die Freigabe der mindestens einen elektrisch betreibbaren Vorrichtung ausgelöst wird, wenn das mindestens eine zweite Verriegelungselement nicht mit dem mindestens einen zweiten Gegenelement in Eingriff gebracht ist, kann somit noch weiter verringert bzw. im Wesentlichen vermieden werden.

Gemäß einer weiteren bevorzugten Ausführungsform des erfindungsgemäßen Behältersystems befindet sich die mindestens eine erste Verriegelungsstelle an einer ersten Seite des Behältersystems und befindet sich die mindestens eine zweite Verriegelungsstelle an einer der ersten Seite des Behältersystems gegenüberliegenden zweite Seite des Behältersystems. Auf diese Weise wird eine bessere und sicherere Verriegelung des Deckels mit dem Behälter erreicht.

Eine weitere bevorzugte Ausführungsform des erfindungsgemäßen Behältersystems ist dadurch gekennzeichnet, dass es sich bei der ersten Verriegelungsmechanik
- um eine Hakenmechanik, eine Bajonettmechanik, eine Verriegelungsmechanik mit Öffnungsknopf, eine Verriegelungsmechanik mit Betätigungsknopf mit Schiebe- und/oder Hebemechanik, eine Verriegelungsmechanik mit rotierender Mechanik, wie z.B. Drehknopf, Welle, Haken, eine Kombination aus Schiebe- und Drehmechanik mit oder ohne Kulisse, oder um eine Kombination hiervon handelt, und/oder
- um eine elektrisch und/oder mechanisch angetriebene Verriegelungsmechanik handelt.

Gemäß einer weiteren bevorzugten Ausführungsform des erfindungsgemäßen Behältersystems umfasst der Deckel eine elektrische Sicherheitseinrichtung (und/oder Sicherheitssoftware) zur Kontrolle der Positionierung des Deckels auf dem Behälter und/oder zur Kontrolle und/oder Steuerung der ersten und/oder zweiten Verriegelungsmechanik. Durch die Kontrolle der Positionierung des Deckels auf dem Behälter über die elektrische Sicherheitseinrichtung kann ein nicht korrektes Platzieren des Deckels auf dem Behälter noch leichter erkannt und vermieden werden. Durch die Steuerung der ersten und/oder zweiten Verriegelungsmechanik über die elektrische Sicherheitseinrichtung wird eine leichtere Handhabung der Verriegelungsmechaniken erreicht, wobei zudem Fehler bei der Betätigung der Verriegelungsmechaniken leichter vermieden werden können. Beispielsweise kann eine elektrische Schaltung mit dem mechanischen Einrasten der Vorrichtung (bzw. der ersten und/oder zweiten Verriegelungsmechanik) kombiniert wird.

Eine weitere bevorzugte Ausführungsform des erfindungsgemäßen Behältersystems zeichnet sich dadurch aus, dass das Auslöseelement
- in Form eines Stifts ausgeführt ist, und/oder
- an einer dem mindestens einen ersten Verriegelungselement zugewandten Seite des Aufnahmebereichs angeordnet ist.

Gemäß einer weiteren bevorzugten Ausführungsform des erfindungsgemäßen Behältersystem weist der Behälter ein Bandelement, vorzugsweise ein Metallband, auf, welches sich von der Auslösestelle des Behälters bis zur mindestens einen elektrisch betreibbaren Vorrichtung erstreckt und durch das Bringen des Auslöseelements in die Auslöseposition an der Auslösestelle verschoben, vorzugsweise nach unten gedrückt, wird, wodurch es ein Sicherheitselement, z.B. einen Sicherheitsschalter, in der mindestens einen elektrisch betreibbaren Vorrichtung freigibt, sodass diese elektrisch betrieben werden kann. Auf diese beispielhafte Weise kann das Auslöseelement die Freigabe der mindestens einen elektrisch betreibbaren Vorrichtung auslösen, wenn es in die Auslöseposition an der Auslösestelle des Behälters gebracht wird.

Eine weitere bevorzugte Ausführungsform des erfindungsgemäßen Behältersystems ist dadurch gekennzeichnet, dass das Schiebelement eine Hebelvorrichtung aufweist, welche eine Drehmechanik umfasst, durch die beim Verschieben des Schiebelements aus der Grundposition in die verschobene Position das Auslöseelement gedreht wird (bzw. in eine aktive Position gedreht wird, aus welcher es in die Auslöseposition gebracht werden kann), wobei, wenn sich das Schiebelement in der Grundposition befindet, das Auslöseelement in einer sich in einem Grundkörper des Deckels befindenden Vertiefung versenkt ist. Auf diese Weise kann eine Manipulation des Auslöseelements (beim Aufsetzen des Deckels auf den Behälter) leichter verhindert werden, da das Auslöseelement (für eine mögliche Berührung oder Manipulation) deutlich schlechter erreichbar ist. Vorzugweise wird das Auslöseelement durch die Drehmechanik beim Verschieben des Schiebelements aus der Grundposition in die verschobene Position um einen Winkel von 10° bis 170°, besonders bevorzugt um einen Winkel von 45° bis 135°, ganz besonders bevorzugt um einen Winkel von 80° bis 100°, beispielsweise um 90°, gedreht.

Gemäß einer weiteren bevorzugten Ausführungsform des erfindungsgemäßen Behältersystems weist das Schiebeelement an einer dem mindestens einen zweiten Verriegelungselement zugewandten Seite ein Ansatzelement auf, an welchem das mindestens eine zweite Gegenelement ansetzbar ist, wobei das Ansatzelement in der Grundposition des Schiebelements so neben dem mindestens einen zweiten Verriegelungselement angeordnet ist, dass durch ein Drücken des am Ansatzelement angesetzten mindestens einen zweiten Gegenelements gegen das Ansatzelement, das mindestens zweite Verriegelungselement mit dem mindestens zweiten Gegenelement in Eingriff bringbar ist.

Eine weitere bevorzugte Ausführungsform des erfindungsgemäßen Behältersystems zeichnet sich dadurch aus, dass
- der Behälter ein Glasbehälter ist, und/oder
- die mindestens eine elektrisch betreibbare Vorrichtung ein Motor oder eine Heizvorrichtung ist.

Durch die Verwendung eines Glasbehälters können höhere Design-Ansprüche erfüllt werden. Zudem ist der Aufwand bezüglich Reinigung deutlich niedriger und die Lebensdauerbeständigkeit des Materials deutlich höher als bei Kunststoff, insbesondere bei der Verwendung in der Spülmaschine. Ferner erfüllt ein Glasbehälter hohe Ansprüche bezüglich der Lebensmittelunbedenklichkeit.

Eine weitere bevorzugte Ausführungsform des erfindungsgemäßen Behältersystems ist dadurch gekennzeichnet, dass das Behältersystem ein Mixer, insbesondere ein Standmixer; eine Kombination aus Rührschüssel und Deckel, insbesondere für eine Küchenmaschine; ein elektrischer Zerkleinerer; ein Wasserkessel; eine Kaffeemaschine, insbesondere eine Aufbrüh-Kaffeemaschine; eine Mahlvorrichtung, insbesondere eine Kaffeemühle; ein Reiskocher; ein Dampfgarer; ein Milchaufschäumer; ein Eierkocher; ein Sandwichmaker; eine Grillvorrichtung, insbesondere ein Kontaktgrill; ein Waffeleisen; eine Fritteuse; oder ein Druckkochtopf ist.

Eine weitere bevorzugte Ausführungsform des erfindungsgemäßen Behältersystems zeichnet sich dadurch aus, dass, nur wenn das mindestens einen zweite Verriegelungselement mit dem mindestens einen zweiten Gegenelement in Eingriff gebracht ist (und sich dadurch das Schiebelement in der verschobenen Position befindet), das Auslöseelement so relativ zum mindestens einen ersten Verriegelungselement positioniert ist, dass bei Aufnahme des oberen Teils des Behälters in den Aufnahmebereich sowohl das mindestens eine erste Verriegelungselement mit dem mindestens einen ersten Gegenelement in Eingriff bringbar ist als auch das Auslöseelement in eine Auslöseposition an einer Auslösestelle des Behälters bringbar ist, in welcher es eine Freigabe der mindestens einen elektrisch betreibbaren Vorrichtung auslöst.

Eine besonders bevorzugte Ausführungsform des erfindungsgemäßen Behältersystems ist dadurch gekennzeichnet, dass das sich Auslöseelement nur dann in der Auslöseposition an der Auslösestelle des Behälters befinden kann, in welcher es eine Freigabe der mindestens einen elektrisch betreibbaren Vorrichtung auslöst, wenn sowohl das mindestens eine erste Verriegelungselement mit dem mindestens einen ersten Gegenelement in Eingriff gebracht ist als auch das mindestens eine zweite Verriegelungselement mit dem mindestens einen zweiten Gegenelement in Eingriff gebracht ist.

Je nach Ausführung des Behälters könnten vorzugsweise weitere Einrastpositionen abgefragt werden, indem die Schiebemechanik entsprechend gekoppelt wird. Diese Ausführung könnte als Sicherheitsabfrage auch bei Deckelverschlüssen mit Bajonette-Verschluss angewendet werden, z.B. Als Abfrage ebenfalls an der Ausgießschnaube oder einer anderen Erhebung am Glasbehälter. Es könnte dieselbe Erhebung mit genutzt werden, die beim der Bajonette-Mechanik verwendet wird.

Da unabhängig einsetzbar kann diese Ausführung bei verschiedensten Verriegelungsausführungen auf der Griffseite kombiniert werden: Vorhanden ist eine Hackeneinrichtung. Ebenfalls kann diese mit einer bekannten Verrieglungsmechanik mit Öffnungsknopf, Betätigungsknopf mit Schiebe- Hebemechanik oder weiteren linearen oder drehbaren Verriegelungsmechaniken kombiniert werden.

Anhand der nachfolgenden Figuren und Beispiele soll die vorliegende Erfindung näher erläutert werden, ohne diese auf die hier gezeigten spezifischen Ausführungsformen und Parameter zu beschränken.

### Ausführungsbeispiel 1

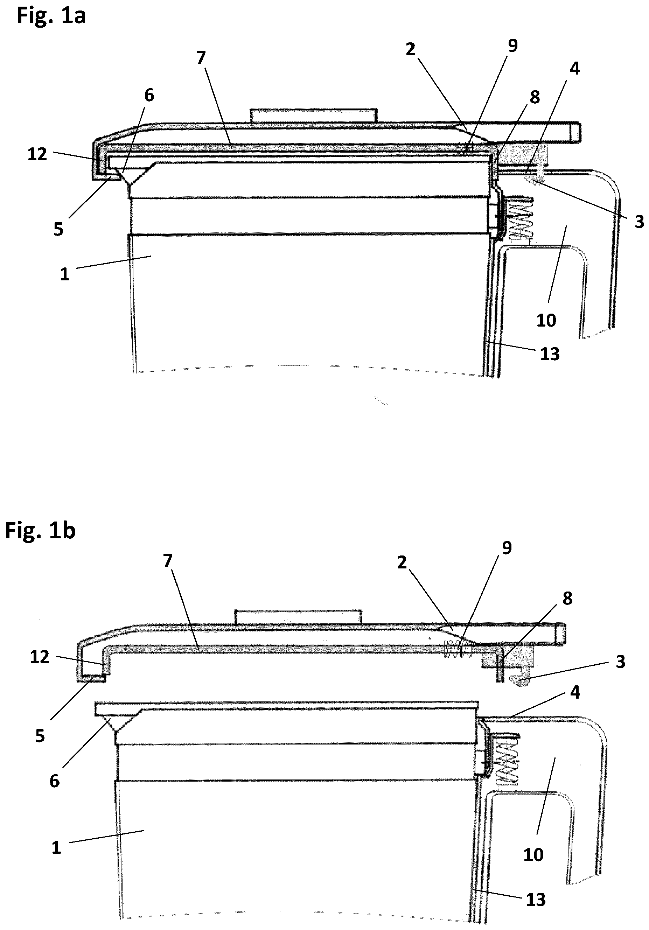

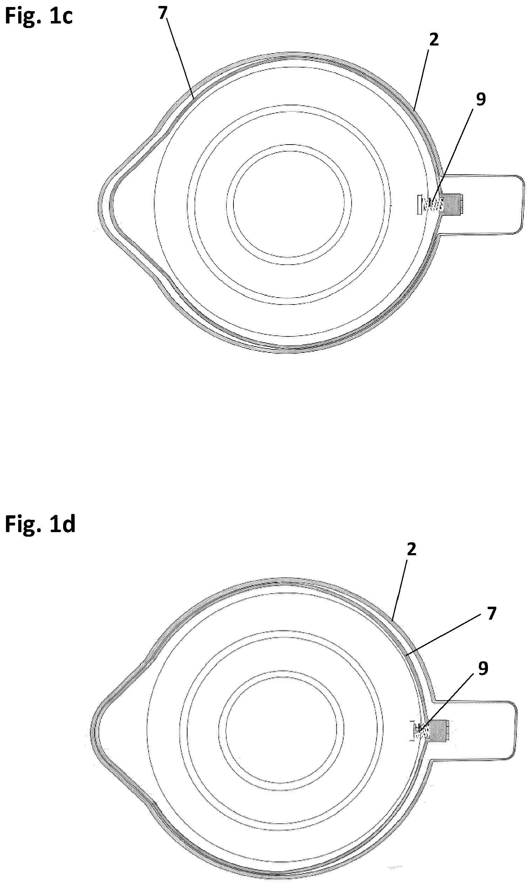

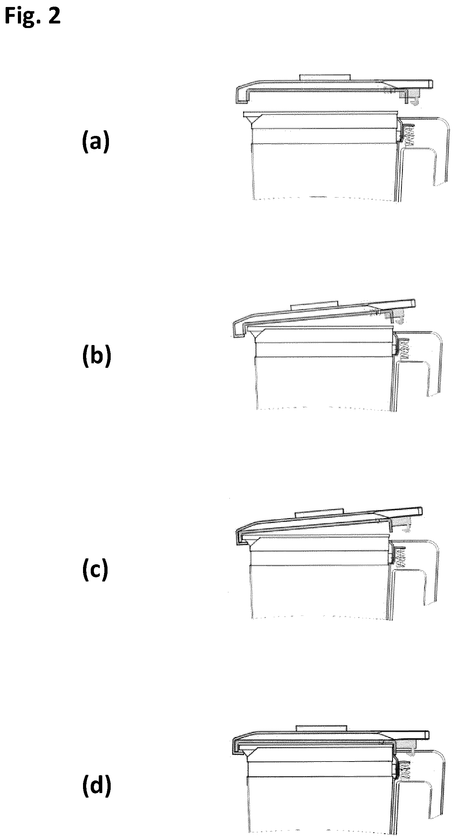

In Fig. 1a bis 1d werden verschiedene Darstellungen einer ersten beispielhaften Ausführungsform des erfindungsgemäßen Behältersystems gezeigt. In Fig. 1a und 1c ist das Behältersystem im geschlossenen Zustand dargestellt, wobei Fig. 1a eine Seitenansicht und Fig. 1c eine Draufsicht zeigt. In Fig. 1b und 1d ist das Behältersystem im offenen bzw. nicht-geschlossenen Zustand dargestellt, wobei Fig. 1b eine Seitenansicht und Fig. 1d eine Draufsicht zeigt. Zudem wird in Fig. 2 das korrekte Aufsetzen des Deckels auf den Behälter dieser ersten beispielhaften Ausführungsform des erfindungsgemäßen Behältersystems veranschaulicht. Aus Gründen der Übersichtlichkeit wurde in Fig. 2 auf die Darstellung der Bezugszeichen verzichtet.

Das Behältersystem umfasst einen Behälter 1, z.B. einen Glasbehälter, und einen Deckel 2 zum Verschließen des Behälters 1. Ferner umfasst das Behältersystem eine elektrisch betreibbare Vorrichtung (nicht in den Figuren dargestellt), z.B. einen Motor, eine erste Verriegelungsmechanik zum Verriegeln des Deckels 2 mit dem Behälter 1 an einer ersten Verriegelungsstelle und eine zweite Verriegelungsmechanik zum Verriegeln des Deckels 2 mit dem Behälter 1 an einer sich von der ersten Verriegelungsstelle unterscheidenden zweiten Verriegelungsstelle.

Bei der ersten Verriegelungsmechanik handelt es sich um eine Hakenmechanik. Die erste Verriegelungsmechanik umfasst ein sich am Deckel 2 befindendes erstes Verriegelungselement 3 in Form eines Hakens, das zum Verriegeln des Deckels 2 mit dem Behälter 1 an der ersten Verriegelungsstelle mit einem sich am Behälter 1 befindenden ersten Gegenelement 4 in Eingriff gebracht werden kann. Ferner weist der Behälter einen Griff 10 auf, der auf der gleichen Seite des Behältersystems angeordnet ist wie das erste Verriegelungselement 3 und das erste Gegenelement 4. Hierbei ist das erste Gegenelement 4 am Griff 10 angeordnet.

Die zweite Verriegelungsmechanik umfasst ein sich am Deckel 2 befindendes zweites Verriegelungselement 5, das zum Verriegeln des Deckels 2 mit dem Behälter 1 an der zweiten Verriegelungsstelle mit einem sich am Behälter 1 befindenden zweiten Gegenelement 6 in Eingriff gebracht werden kann. Dabei ist das zweite Verriegelungselement 5 in Form einer Hinterschneidung am Rand des Deckels 2 ausgeführt. Beim zweiten Gegenelement 6 handelt es sich um eine am Behälter 1 angeordnete Schnaupe bzw. einen Teil dieser Schnaupe.

In Fig. 1b, welche das Behältersystem im geschlossenen Zustand zeigt, ist erkennbar, dass sowohl das erste Verriegelungselement 3 in Eingriff mit dem ersten Gegenelement 4 ist bzw. steht als auch das zweite Verriegelungselement 5 in Eingriff mit dem zweiten Gegenelement 6 ist bzw. steht, d.h. der Deckel ist hier sowohl über die erste Verriegelungsmechanik an der ersten Verriegelungsstell als auch über die zweite Verriegelungsmechanik an der zweiten Verriegelungsstelle mit dem Behälter verriegelt. Die erste Verriegelungsstelle befindet sich dabei an einer ersten Seite des Behältersystems und die zweite Verriegelungsstelle befindet sich an einer der ersten Seite des Behältersystems gegenüberliegenden zweiten Seite des Behältersystems.

Der Deckel 2 umfasst ferner einen Schiebemechanismus mit einem Schiebeelement 7, welches ein Auslöseelement 8 zum Auslösen einer Freigabe der elektrisch betreibbaren Vorrichtung und einen Aufnahmebereich zur Aufnahme eines oberen Teils des Behälters 1 aufweist. Das Auslöseelement 8 ist in Form eines Stifts ausgeführt und an einer dem ersten Verriegelungselement 3 zugewandten Seite des Aufnahmebereichs angeordnet. Das Schiebeelement 7 kann durch das in Eingriff Bringen des zweiten Verriegelungselements 5 mit dem zweiten Gegenelement 8 in eine Richtung parallel zu einer Grundfläche des Deckels 2 aus einer Grundposition in eine verschobene Position verschoben werden. In Fig. 1a und 1c befindet sich das Schiebelement in der verschobenen Position, wohingegen es sich in Fig. 1b und 1d in der Grundposition befindet.

Das Schiebeelement 7 weist an einer dem zweiten Verriegelungselement 5 zugewandten Seite ein Ansatzelement 12 auf, an welchem das zweite Gegenelement 6 angesetzt werden kann. Dabei ist das Ansatzelement 12 in der Grundposition des Schiebelements 7 so neben dem zweiten Verriegelungselement 5 angeordnet, dass durch ein Drücken des am Ansatzelement 12 angesetzten zweiten Gegenelements 6 gegen das Ansatzelement 12, das zweite Verriegelungselement 5 mit dem zweiten Gegenelement 6 in Eingriff gebracht wird.

Zudem weist der Schiebemechanismus ein Federelement 9 auf, welches in einem entspannten Zustand ist, wenn sich das Schiebelement 7 in der Grundposition befindet, und welches in einem gespannten Zustand ist, wenn sich das Schiebelement 7 in der verschobenen Position befindet. Das Federelement 9 ist so ausgeführt, dass es beim das Verschieben des Schiebeelements 7 von der Grundposition in die verschobene Position - durch das in Eingriff Bringen des zweiten Verriegelungselements 5 mit dem zweiten Gegenelement 6 - vom entspannten Zustand in den gespannten Zustand überführt wird und dass es beim Übergang vom gespannten Zustand in den entspannten Zustand das Schiebeelement 7 (von der verschobenen Position) in die Grundposition verschiebt. Durch das Federelement 9 bewegt sich das Schiebelement 7b somit automatisch (aus der verschobenen Position) in die Grundposition zurück, wenn das zweite Verriegelungselement 5 aus dem Eingriff mit dem zweiten Gegenelement 6 entfernt wird.

In Fig. 2 wird das korrekte Aufsetzen des Deckels auf den Behälter der ersten beispielhaften Ausführungsform des erfindungsgemäßen Behältersystems veranschaulicht. In Darstellung (a) der Fig. 2 ist das Behältersystem im offenen bzw. nicht-geschlossenen Zustand gezeigt. Diese Darstellung entspricht derjenigen in Fig. 1b. Zum korrekten Aufsetzen wird nun zunächst das zweite Gegenelement 6 an dem Ansatzelement 12 angesetzt, wie es in Darstellung (b) der Fig. 2 gezeigt ist. Anschließend wird durch ein Drücken des am Ansatzelement 12 angesetzten zweiten Gegenelements 6 gegen das Ansatzelement 12, das zweite Verriegelungselement 5 mit dem zweiten Gegenelement 6 in Eingriff gebracht wird, wodurch gleichzeitig das Schiebeelement 7 in eine Richtung parallel zur Grundfläche des Deckels 2 aus der Grundposition in die verschobene Position verschoben wird und das Federelement 9 vom entspannten Zustand in den gespannten Zustand überführt wird. Hierdurch ergibt sich der Zustand des Behältersystems wie er in Darstellung (c) der Fig. 2 dargestellt ist, in welchem das zweite Verriegelungselement 5 mit dem zweiten Gegenelement 6 in Eingriff ist bzw. steht und sich das Schiebeelement 7 in der verschobenen Position befindet. Im Anschluss kann der obere Teil des Behälters 1 in den Aufnahmebereich aufgenommen werden, wodurch sowohl das mindestens eine erste Verriegelungselement 3 mit dem mindestens einen ersten Gegenelement 4 in Eingriff gebracht wird als auch das Auslöseelement 9 in eine Auslöseposition an einer Auslösestelle des Behälters 1 gebracht wird, in welcher es eine Freigabe der mindestens einen elektrisch betreibbaren Vorrichtung auslöst. Hierdurch befindet sich das Behältersystem nun im geschlossenen Zustand, wie in Darstellung (d) der Fig. 2 dargestellt. Diese Darstellung entspricht derjenigen in Fig. 1a.

Wie insbesondere aus den Darstellungen (c) und (d) der Fig. 2 hervorgeht ist, wenn sich das Schiebelement 7 in der verschobenen Position befindet, das Auslöseelement 8 so relativ zum ersten Verriegelungselement 3 positioniert, dass bei Aufnahme des oberen Teils des Behälters 1 in den Aufnahmebereich sowohl das erste Verriegelungselement 3 mit dem ersten Gegenelement 4 in Eingriff gebracht wird als auch das Auslöseelement 8 in die Auslöseposition an der Auslösestelle des Behälters 1 gebracht wird, in welcher es eine Freigabe der mindestens einen elektrisch betreibbaren Vorrichtung auslöst. Wenn sich das Schiebelement 7 hingegen in der Grundposition befindet, wie in den Darstellungen (a) und (b) der Fig. 2, ist das Auslöseelement 8 so relativ zum ersten Verriegelungselement 3 positioniert, dass weder das Auslöseelement 8 in die Auslöseposition an der Auslösestelle des Behälters 1 gebracht werden kann noch das erste Verriegelungselement 3 mit dem ersten Gegenelement 4 in Eingriff gebracht werden. Hierbei weisen das Auslöseelement 8 und das mindestens eine erste Verriegelungselement 3, wenn sich das Schiebelement 7 in der verschobenen Position befinden, einen größeren Abstand zueinander auf als, wenn sich das Schiebelement 7 in der Grundposition befindet. Zudem steht das erste Verriegelungselement 3 in einer zur Grundfläche des Deckels 2 senkrecht verlaufenden Richtung weiter von einem Grundkörper des Deckels 2 ab als das Auslöseelement 8. Ferner weist der Behälter 1 eine erste Vertiefung für das erste Verriegelungselement und eine zweite Vertiefung für das Auslöseelement auf. In die erste Vertiefung wird das erste Verriegelungselement 3 beim in Eingriff Bringen des ersten Verriegelungselements 3 mit dem ersten Gegenelement 4 eingeführt. In die zweite Vertiefung wird das Auslöseelement 8 beim Bringen des Auslöseelements 8 in die Auslöseposition an der Auslösestelle des Behälters 1 eingeführt. Wenn sich das Schiebelement 7 in der verschobenen Position befindet, weisen das Auslöseelement 8 und das erste Verriegelungselement 3 einen Abstand zueinander auf, der dem Abstand zwischen der ersten Vertiefung und der zweiten Vertiefung entspricht, wohingegen, wenn sich das Schiebelement 7 in der Grundposition befindet, das Auslöseelement 8 und das erste Verriegelungselement 3 einen Abstand zueinander aufweisen, der kleiner als der Abstand zwischen der ersten Vertiefung und der zweiten Vertiefung ist. In der Folge kann das Auslöseelement 8 nur dann in die zweite Vertiefung eingeführt und dort in die Auslöseposition an der Auslösestelle des Behälters 1 gebracht werden, wenn sich das Schiebelement 7 in der verschobenen Position befindet, da dann das erste Verriegelungselement 3 gleichzeitig in die erste Vertiefung eingeführt werden kann. Befindet sich das Schiebelement 7 hingegen in der Grundposition ist der Abstand zwischen Auslöseelement 8 und erstem Verriegelungselement 3 zu gering, um sie in die jeweiligen Vertiefungen einzuführen. Das Auslöseelement 8 kann so nicht in die zweite Vertiefung eingeführt werden, da das erste Verriegelungselement 3 nicht in die erste Vertiefung eingeführt werden kann und so das Einführen des Auslöseelements 8 in die zweite Vertiefung blockiert.

Der Behälter 1 weist ferner ein Bandelement 13, z.B. ein Metallband, auf, welches sich von der Auslösestelle des Behälters 1 bis zur elektrisch betreibbaren Vorrichtung erstreckt und durch das Bringen des Auslöseelements 8 in die Auslöseposition an der Auslösestelle nach unten gedrückt wird, wodurch es einen Sicherheitsschalter in der elektrisch betreibbaren Vorrichtung freigibt, sodass diese elektrisch betrieben werden kann. Auf diese Weise kann das Auslöseelement 8 die Freigabe der elektrisch betreibbaren Vorrichtung auslösen, wenn es in die Auslöseposition an der Auslösestelle des Behälters gebracht wird.

### Ausführungsbeispiel 2

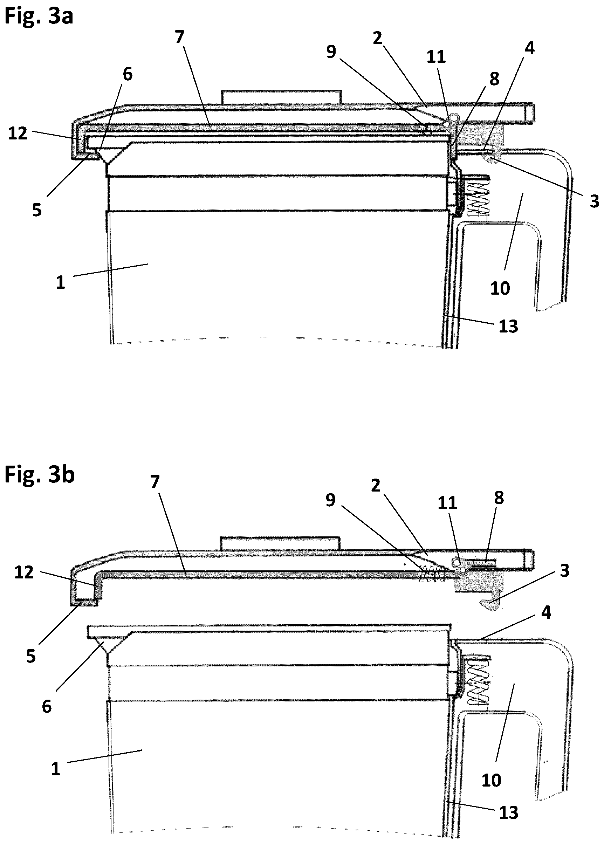

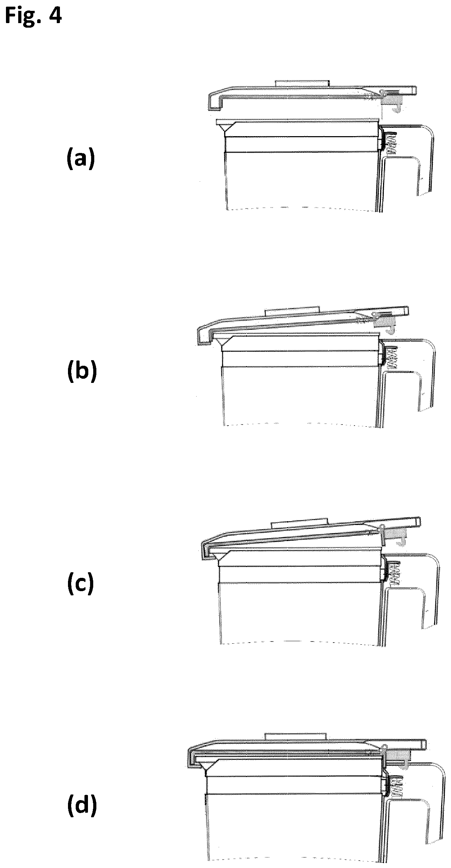

In Fig. 3a bis 3d werden verschiedene Darstellungen einer zweiten beispielhaften Ausführungsform des erfindungsgemäßen Behältersystems gezeigt. In Fig. 3a und 3c ist das Behältersystem im geschlossenen Zustand dargestellt, wobei Fig. 3a eine Seitenansicht und Fig. 3c eine Draufsicht zeigt. In Fig. 3b und 3d ist das Behältersystem im offenen bzw. nicht-geschlossenen Zustand dargestellt, wobei Fig. 3b eine Seitenansicht und Fig. 3d eine Draufsicht zeigt. Zudem wird in Fig. 4 das korrekte Aufsetzen des Deckels auf den Behälter dieser zweiten beispielhaften Ausführungsform des erfindungsgemäßen Behältersystems veranschaulicht. Aus Gründen der Übersichtlichkeit wurde in Fig. 4 auf die Darstellung der Bezugszeichen verzichtet.

Das Behältersystem gemäß der zweiten beispielhaften Ausführungsform unterscheidet sich dadurch vom Behältersystem gemäß der ersten beispielhaften Ausführungsform, dass das Schiebelement 7 eine Hebelvorrichtung 11 aufweist, welche eine Drehmechanik umfasst, durch die beim Verschieben des Schiebelements 7 aus der Grundposition in die verschobene Position das Auslöseelement 8 um 90° gedreht wird, wobei, wenn sich das Schiebelement 7 in der Grundposition befindet, das Auslöseelement 8 in einer sich in einem Grundkörper des Deckels 2 befindenden Vertiefung versenkt ist. Auf diese Weise kann eine Manipulation des Auslöseelements 8 (beim Aufsetzen des Deckels 2 auf den Behälter 1) leichter verhindert werden, da das Auslöseelement 8 (für eine mögliche Berührung oder Manipulation) deutlich schlechter erreichbar ist.

Ansonsten entspricht die Funktionsweise des Behältersystem gemäß der zweiten beispielhaften Ausführungsform derjenigen des Behältersystems gemäß der ersten beispielhaften Ausführungsform, wobei die Bezugszeichen, den gleichen Elementen entsprechen.

In Fig. 4 wird das korrekte Aufsetzen des Deckels auf den Behälter der zweiten beispielhaften Ausführungsform des erfindungsgemäßen Behältersystems veranschaulicht. In Darstellung (a) der Fig. 4 ist das Behältersystem im offenen bzw. nicht-geschlossenen Zustand gezeigt. Diese Darstellung entspricht derjenigen in Fig. 3b. Das Auslöseelement 8 ist hier in einer sich im Grundkörper des Deckels 2 befindenden Vertiefung versenkt. Zum korrekten Aufsetzen wird nun zunächst das zweite Gegenelement 6 an dem Ansatzelement 12 angesetzt, wie es in Darstellung (b) der Fig. 4 gezeigt ist. Anschließend wird durch ein Drücken des am Ansatzelement 12 angesetzten zweiten Gegenelements 6 gegen das Ansatzelement 12, das zweite Verriegelungselement 5 mit dem zweiten Gegenelement 6 in Eingriff gebracht wird, wodurch gleichzeitig das Schiebeelement 7 in eine Richtung parallel zur Grundfläche des Deckels 2 aus der Grundposition in die verschobene Position verschoben wird, das Federelement 9 vom entspannten Zustand in den gespannten Zustand überführt wird und zudem durch die Drehmechanik das Auslöseelement 8 um 90° gedreht wird. Hierdurch ergibt sich der Zustand des Behältersystems wie er in Darstellung (c) der Fig. 4 dargestellt ist, in welchem das zweite Verriegelungselement 5 mit dem zweiten Gegenelement 6 in Eingriff ist bzw. steht und sich das Schiebeelement 7 in der verschobenen Position befindet. Im Anschluss kann der obere Teil des Behälters 1 in den Aufnahmebereich aufgenommen werden, wodurch sowohl das mindestens eine erste Verriegelungselement 3 mit dem mindestens einen ersten Gegenelement 4 in Eingriff gebracht wird als auch das Auslöseelement 9 in eine Auslöseposition an einer Auslösestelle des Behälters 1 gebracht wird, in welcher es eine Freigabe der mindestens einen elektrisch betreibbaren Vorrichtung auslöst. Hierdurch befindet sich das Behältersystem nun im geschlossenen Zustand, wie in Darstellung (d) der Fig. 4 dargestellt. Diese Darstellung entspricht derjenigen in Fig. 3a.

## Patentansprüche

1. Behältersystem umfassend einen Behälter (1) und einen Deckel (2) zum Verschließen des Behälters (1), wobei das Behältersystem mindestens eine elektrisch betreibbare Vorrichtung, eine erste Verriegelungsmechanik zum Verriegeln des Deckels (2) mit dem Behälter (1) an mindestens einer ersten Verriegelungsstelle und eine zweite Verriegelungsmechanik zum Verriegeln des Deckels (2) mit dem Behälter (1) an mindestens einer sich von der mindestens einen ersten Verriegelungsstelle unterscheidenden zweiten Verriegelungsstelle umfasst,
wobei die erste Verriegelungsmechanik mindestens ein sich am Deckel (2) befindendes erstes Verriegelungselement (3) umfasst, das zum Verriegeln des Deckels (2) mit dem Behälter (1) an der mindestens einen ersten Verriegelungsstelle mit mindestens einem sich am Behälter (1) befindenden ersten Gegenelement (4) in Eingriff bringbar ist,
wobei die zweite Verriegelungsmechanik mindestens ein sich am Deckel (2) befindendes zweites Verriegelungselement (5) umfasst, das zum Verriegeln des Deckels (2) mit dem Behälter (1) an der mindestens einen zweiten Verriegelungsstelle mit mindestens einem sich am Behälter (1) befindenden zweiten Gegenelement (6) in Eingriff bringbar ist,
wobei der Deckel (2) einen Schiebemechanismus mit einem Schiebeelement (7) umfasst, welches ein Auslöseelement (8) zum Auslösen einer Freigabe der mindestens einen elektrisch betreibbaren Vorrichtung und einen Aufnahmebereich zur Aufnahme eines oberen Teils des Behälters (1) aufweist, und
wobei durch das in Eingriff Bringen des mindestens einen zweiten Verriegelungselements (5) mit dem mindestens einen zweiten Gegenelement (8) das Schiebeelement (7) in eine Richtung parallel zu einer Grundfläche des Deckels (2) aus einer Grundposition in eine verschobene Position verschiebbar ist,
wobei, wenn sich das Schiebelement (7) in der verschobenen Position befindet, das Auslöseelement (8) so relativ zum mindestens einen ersten Verriegelungselement (3) positioniert ist, dass bei Aufnahme des oberen Teils des Behälters (1) in den Aufnahmebereich sowohl das mindestens eine erste Verriegelungselement (3) mit dem mindestens einen ersten Gegenelement (4) in Eingriff bringbar ist als auch das Auslöseelement (8) in eine Auslöseposition an einer Auslösestelle des Behälters (1) bringbar ist, in welcher es eine Freigabe der mindestens einen elektrisch betreibbaren Vorrichtung auslöst, und
wobei, wenn sich das Schiebelement (7) in der Grundposition befindet, das Auslöseelement (8) so relativ zum mindestens einen ersten Verriegelungselement (3) positioniert ist, dass das Auslöseelement (8) nicht in die Auslöseposition an der Auslösestelle des Behälters(1) bringbar ist.

2. Behältersystem gemäß dem vorhergehenden Anspruch, **dadurch gekennzeichnet, dass**, wenn sich das Schiebelement (7) in der Grundposition befindet, das Auslöseelement (8) so relativ zum mindestens einen ersten Verriegelungselement (3) positioniert ist, dass weder das Auslöseelement (8) in die Auslöseposition an der Auslösestelle des Behälters (1) bringbar ist noch das mindestens eine erste Verriegelungselement (3) mit dem mindestens einen ersten Gegenelement (4) in Eingriff bringbar ist.

3. Behältersystem gemäß einem der vorhergehenden Ansprüche,
**dadurch gekennzeichnet, dass**
- das Auslöseelement (8) und das mindestens eine erste Verriegelungselement (3), wenn sich das Schiebelement (7) in der verschobenen Position befindet, einen größeren Abstand zueinander aufweisen als, wenn sich das Schiebelement (7) in der Grundposition befindet, und/oder
- das mindestens einen erste Verriegelungselement (3) in einer zur Grundfläche des Deckels (2) senkrecht verlaufenden Richtung weiter von einem Grundkörper des Deckels (2) absteht als das Auslöseelement (8), und/oder
- der Behälter (1) eine erste Vertiefung aufweist, in welche das mindestens eine erste Verriegelungselement (3) beim in Eingriff Bringen des mindestens einen ersten Verriegelungselements (3) mit dem mindestens einen ersten Gegenelement (4) einführbar ist und der Behälter (1) eine zweite Vertiefung aufweist, in welche das Auslöseelement (8) beim Bringen des Auslöseelements (8) in die Auslöseposition an der Auslösestelle des Behälters (1) einführbar ist,
wobei vorzugsweise, wenn sich das Schiebelement (7) in der verschobenen Position befindet, das Auslöseelement (8) und das mindestens eine erste Verriegelungselement (3) einen Abstand zueinander aufweisen, der dem Abstand zwischen der ersten Vertiefung und der zweiten Vertiefung entspricht, und, wenn sich das Schiebelement (7) in der Grundposition befindet, das Auslöseelement (8) und das mindestens eine erste Verriegelungselement (3) einen Abstand zueinander aufweisen, der kleiner ist als der Abstand zwischen der ersten Vertiefung und der zweiten Vertiefung.

4. Behältersystem gemäß einem der vorhergehenden Ansprüche, **dadurch gekennzeichnet, dass** das mindestens eine zweite Verriegelungselement (5) in Form mindestens einer Hinterschneidung am Rand des Deckels (2) ausgeführt ist und das mindestens eine zweite Gegenelement (6) mindestens ein vorstehender Abschnitt des oberen Teils des Behälters (1), vorzugsweise eine am Behälter (1) angeordnete Schnaupe oder ein Teil einer am Behälter (1) angeordneten Schnaupe, ist.

5. Behältersystem gemäß einem der vorhergehenden Ansprüche, **dadurch gekennzeichnet, dass** das mindestens eine zweite Verriegelungselement (5) mehrere zweite Verrieglungselemente umfasst und/oder das mindestens eine zweite Gegenelement (6) mehrere zweite Gegenelemente umfasst.

6. Behältersystem gemäß einem der vorhergehenden Ansprüche, **dadurch gekennzeichnet, dass** der Schiebemechanismus ein Federelement (9) aufweist, welches in einem entspannten Zustand ist, wenn sich das Schiebelement (7) in der Grundposition befindet, und welches in einem gespannten Zustand ist, wenn sich das Schiebelement (7) in der verschobenen Position befindet.

7. Behältersystem gemäß einem der vorhergehenden Ansprüche, **dadurch gekennzeichnet, dass** der Behälter einen Griff (10) aufweist, der auf der gleichen Seite des Behältersystems angeordnet ist wie das mindestens eine erste Verriegelungselement (3) und/oder das mindestens eine erste Gegenelement (4), wobei das mindestens eine erste Gegenelement (4) vorzugsweise am Griff (10) angeordnet ist.

8. Behältersystem gemäß einem der vorhergehenden Ansprüche, **dadurch gekennzeichnet, dass** sich die mindestens eine erste Verriegelungsstelle an einer ersten Seite des Behältersystems und sich die mindestens eine zweite Verriegelungsstelle an einer der ersten Seite des Behältersystems gegenüberliegenden zweiten Seite des Behältersystems befindet.

9. Behältersystem gemäß einem der vorhergehenden Ansprüche, **dadurch gekennzeichnet, dass** es sich bei der ersten Verriegelungsmechanik
- um eine Hakenmechanik, eine Bajonettmechanik, eine Verriegelungsmechanik mit Öffnungsknopf, eine Verriegelungsmechanik mit Betätigungsknopf mit Schiebe- und/oder Hebemechanik, eine Verriegelungsmechanik mit rotierender Mechanik, wie z.B. Drehknopf, Welle, Haken, eine Kombination aus Schiebe- und Drehmechanik mit oder ohne Kulisse, oder um eine Kombination hiervon handelt, und/oder
- um eine elektrisch und/oder mechanisch angetriebene Verriegelungsmechanik handelt.

10. Behältersystem gemäß einem der vorhergehenden Ansprüche, **dadurch gekennzeichnet, dass** der Deckel (2) eine elektrische Sicherheitseinrichtung zur Kontrolle der Positionierung des Deckels (2) auf dem Behälter (1) und/oder zur Kontrolle und/oder Steuerung der ersten und/oder zweiten Verriegelungsmechanik umfasst.

11. Behältersystem gemäß einem der vorhergehenden Ansprüche, **dadurch gekennzeichnet, dass** das Auslöseelement (8)
- in Form eines Stifts ausgeführt ist, und/oder
- an einer dem mindestens einen ersten Verriegelungselement (3) zugewandten Seite des Aufnahmebereichs angeordnet ist.

12. Behältersystem gemäß einem der vorhergehenden Ansprüche, **dadurch gekennzeichnet, dass** das Schiebelement (7) eine Hebelvorrichtung (11) aufweist, welche eine Drehmechanik umfasst, durch die beim Verschieben des Schiebelements (7) aus der Grundposition in die verschobene Position das Auslöseelement (8) gedreht wird, wobei, wenn sich das Schiebelement (7) in der Grundposition befindet, das Auslöseelement (8) in einer sich in einem Grundkörper des Deckels (2) befindenden Vertiefung versenkt ist.

13. Behältersystem gemäß einem der vorhergehenden Ansprüche, **dadurch gekennzeichnet, dass** das Schiebeelement (7) an einer dem mindestens einen zweiten Verriegelungselement (5) zugewandten Seite ein Ansatzelement (12) aufweist, an welchem das mindestens eine zweite Gegenelement (6) ansetzbar ist, wobei das Ansatzelement (12) in der Grundposition des Schiebelements (7) so neben dem mindestens einen zweiten Verriegelungselement (5) angeordnet ist, dass durch ein Drücken des am Ansatzelement (12) angesetzten mindestens einen zweiten Gegenelements (6) gegen das Ansatzelement (12), das mindestens zweite Verriegelungselement (5) mit dem mindestens zweiten Gegenelement (6) in Eingriff bringbar ist.

14. Behältersystem gemäß einem der vorhergehenden Ansprüche, **dadurch gekennzeichnet, dass**
- der Behälter (1) ein Glasbehälter ist, und/oder
- die mindestens eine elektrisch betreibbare Vorrichtung ein Motor oder eine Heizvorrichtung ist.

15. Behältersystem gemäß einem der vorhergehenden Ansprüche, **dadurch gekennzeichnet, dass** das Behältersystem ein Mixer, insbesondere ein Standmixer; eine Kombination aus Rührschüssel und Deckel, insbesondere für eine Küchenmaschine; ein elektrischer Zerkleinerer; ein Wasserkessel; eine Kaffeemaschine, insbesondere eine Aufbrüh-Kaffeemaschine; eine Mahlvorrichtung, insbesondere eine Kaffeemühle; ein Reiskocher; ein Dampfgarer; ein Milchaufschäumer; ein Eierkocher; ein Sandwichmaker; eine Grillvorrichtung, insbesondere ein Kontaktgrill; ein Waffeleisen; eine Fritteuse; oder ein Druckkochtopf ist.
